# EUROPEAN PATENT APPLICATION

(11) **EP 2 570 256 A1**
(43) Date of publication of application: **20.03.2013**
(21) Application number: 11780249.6
(22) Date of filing: 04.05.2011
(51) Int. Cl.: B32B 13/00, B32B 13/02

(54) **MICROCEMENT LAMINATE AND RELATED PRODUCTION METHOD**

(30) Priority: 13.05.2010 ES 201030714
(71) Applicant: Miro Heredia, Lluis Maria, 43513 Tarragona (ES); Plaza Esturgo, Susana, 500 Andorra la Vella (AD)
(72) Inventor: Miro Heredia, Lluis Maria, 43513 Tarragona (ES); Plaza Esturgo, Susana, 500 Andorra la Vella (AD)
(74) Representative: Carpintero Lopez, Francisco
(86) International application number: PCT/ES2011/070322
(87) International publication number: WO 2011/141603

(57) **Abstract**

Microcement laminate for covering surfaces that comprises a body having four overlapping layers: a structural base layer (1), a polymeric microcement layer (3), a sealing or priming layer (4) and a surface finishing layer (5), in which the laminate is flexible, moldable, between 0.3 mm and 4 mm thick and supplied in rolls or tiles for quick and easy application.

## Description

### Object of the Invention

The object of the present invention is a polished cement or microcement sheet or laminate having a thickness between 0.3 mm and 4 mm suitable to be used for coating surfaces such as floors, walls, columns, stairs, furnishings and other surfaces both indoors and outdoors, which adheres to the surfaces by means of an adhesive mortar.

The present invention also relates to a process of obtaining said laminar structure and the use thereof for coating surfaces both indoors and outdoors.

### Background of the Invention

Attempts to obtain floorings or coatings with various properties suitable to be used indoors and outdoors are known in the state of the art.

Today, structures such as architectural structures can be coated in many ways, for example by means of polished cement or microcement, a coating being understood as two components applied directly on several porous or non-porous supports.

As understood in the state of the art, polished cement or microcement is a type of continuous flooring, i.e., which are not isolated tiles such as marble, granite or porcelain stoneware. It is a material which is directly applied manually on the surface to be coated producing a continuous laminate.

Polished cement or microcement consists of a refined cement layer to which substances such as hydraulic binders, synthetic resins, specific additives and/or selected colorants are applied, which is then polished with a special machine and a protective layer is applied thereon.

Polished cement or microcement can be used both in large spaces and in small areas both indoors and outdoors. Its application in several layers with interlayer sanding is laborious and is performed manually with a trowel. It has very different finishing in colors, textures and glossiness.

Normally, polished cement or microcement has the peculiarity that its cost depends directly on the experience of the operator applying it. To that end, it is necessary to obtain a polished cement or microcement laminate having the advantage of easy application in which there is not so much variability depending on the operator applying it.

In conventional application, in order to achieve a good polished cement appearance, it is necessary to have qualified staffs who work with precision in more delicate areas such as the edges, corners and at outlet meeting points. This involves staff movement and work disturbances such as dust, noise, odor and limiting or cutting off pedestrian traffic for several days, particularly if work is performed to a floor.

To prevent the drawbacks of the conventional application, the polished microcement laminate object of the present invention is developed by means of a process on a base and is supplied in rolls or tiles which are fixed to the support by means of a specific adhesive mortar.

The microcement laminate object of the present invention has the property of being flexible, allowing malleability and adaptation to the shapes of the support, as well as the property of being able to be cut easily with a simple knife, drastically reducing disturbances and working time, being able to be applied by any person without needing great skills. The microcement is then stiffened by means of applying an adhesive to adhere it to a support, preferably an adhesive cement, obtaining a finished surface with an optimum mechanical strength.

Therefore, a microcement laminate solving the drawbacks of the state of the art, favoring an easy to use and highly resistant optimum microcement laminate is obtained with the present invention.

### Description of the Invention

The present invention has been developed in order to provide a polished cement or microcement laminate solving the drawbacks mentioned above, further providing additional advantages which will be evident from the following accompanying description and which can be summarized in the following manner:
- The microcement sheet coating has very advantageous qualities with respect to the conventional system since it is an easy, quick to install and malleable finished product, being able to coat circular columns, furnishings, among other surfaces, without needing to be a professional applicator or operator.
- It reduces working time both during lamination and placement, which leads to a very significant price reduction for the end user that can be up to 50% with respect to the current prices, not counting the disturbances caused by having a team of applicators for several days producing noises, dust and strong odors at home.
- The working time is optimized since more than 250m² can be finished and ready for use in one day with a team of two people; with respect to 50m² obtained in the same time with conventional application, not counting the time for drying the last layer of varnish that tends to be incorporated.
- The laminating process object of the present invention is performed in controlled temperature, humidity and environment pollution conditions, assuring a product with all its qualities intact and a high quality surface finishing. The same optimum finishing can hardly be achieved with the conventional method because, dust which is always present in the application site, drying air currents, temperature fluctuations, -particularly outdoors-, stains or blows before sealing or varnishing, make it very difficult to achieve a finishing like that in the microcement sheets previously manufactured with the process of the present invention in a site studied and adapted perfectly for such purpose.

Furthermore, the microcement sheet object of the present invention is supplied with a protective film on the visible face to prevent stains, scratches, etc., and so that the installer can hand over his work in optimum conditions. In conventional application (particularly on floors), once the last layer of varnish is applied, it cannot be protected with any type of material since there is a risk of it adhering to the varnish, for such purpose one must wait until the varnish is completely dry (between 48 and 72 hours), leaving the work done exposed to all type of actions which may deteriorate the material and/or the surface.

By comparing the microcement sheet object of the present invention with other products existing on the market (PVC sheets or melamines), microcement is a natural product (not derived from petroleum and does not produce static electricity) which favors the use thereof by the user.

Therefore, an object of the invention is to provide a microcement laminate for coating surfaces consisting of a cementitious sheet having a minimum thickness of 0.3 mm supplied in rolls or tiles for quick and easy application by means of an adhesive mortar. Its flexibility allows it to be malleable and to be adapted to the shapes of the support, and it can be cut perfectly with a knife.

These flexibilities of the microcement sheet are lost when it is adhered to the support by means of a +/- 1.5 mm layer of adhesive cement and the adhesive cement has settled, obtaining a finished surface with a mechanical strength of about 33 N/mm². The microcement sheets can be glued together with different types of adhesive according to needs, but without assuring the strength offered by the adhesive mortar thereto, whereby a microcement laminate solving the drawbacks of the state of the art favoring an easy to use and highly resistance optimum microcement laminate is obtained by means of the object of the present invention.

The adhesive mortar is especially designed for obtaining the stiffness necessary for the sheet with the qualities of being impermeable and of having high adherence to all type of supports, with a minimum thickness of 1 mm. A priming or anchoring bridge is applied to this structure assuring the grip of the microcement layer or layers applied manually or mechanically. Where appropriate, desired engraving, veiling, screen printing are performed. Finally, it is subjected to surface drying and finishing.

The new product is preferably characterized by being able to be manufactured on a structural base (1) of natural or synthetic origin or both combined, or on a base formed by a thin microcement layer, to which a mass comprising fibers has been applied, which favors transporting and applying the product easily.

For the object of the present invention, it is understood that:
- Structural base (1): refers to the structure on which the different materials are applied for the purpose of creating the microcement sheet. This structure can be a fiberglass veil with a minimum of 50 g/m²; or a geotextile with a minimum of 100 g/m²; natural hessians such as jute can also be used as a structural base; or a thin cement or microcement layer can be made with a mass comprising polypropylene microfibers and/or steel and/or natural materials in varying amounts according to the qualities to be reinforced.
- Base priming layer(2): in the event of using a fiberglass veil, geotextile or hessians, the structural base must be impregnated with an acrylic-based styrene copolymer with a minimum consumption of 50 g/m² for the purpose of the next layer of microcement adhering to the structural base.
- Microcement layer (3): the microcement is formulated based on hydraulic binders, synthetic resins, specific additives and colorants. To make the mass, it must be mixed in a ratio of 1:2 or 1:3 with respect to water or polymer resin, and the mass must be spread on the dry, primed base with a minimum consumption of 300 g/m² per layer, performing gentle sanding between every already dried layer. Where appropriate, desired engraving, veiling, and/or screen printing are performed on the last or second last layer.
- Sealing or priming layer (4): application of a layer based on synthetic resins made of acrylic copolymers with an approximate consumption of 45 g/m² or of a layer of polyurethane or epoxy resin and a consumption of about 60 g/m², applied manually or with a varnishing gun.
- Surface finishing layer (5): finishing is performed on one or two layers according to the type of finishing which can be with 40 g/m² waxes, acrylic varnishes, polyurethanes, epoxies, etc., with a mean consumption of 70 g/m² per layer. The layers can be applied both manually and with a varnishing gun.

Therefore, an object of the invention is to provide a microcement laminate for coating surfaces comprising a body provided with at least 4 overlapping layers: a structural base layer (1), a polymeric or non-polymeric microcement layer (3), a sealing or priming layer (4) and a surface finishing layer (5), which is characterized in that the laminate is flexible and moldable and in that it has a thickness between 0.3 mm and 4 mm and it is fixed to the surfaces to be coated by means of an adhesive, preferably an adhesive mortar.

The layer (1) can preferably be a fiberglass veil with a minimum of 50 g/m² and has in a non-limiting manner preferred measurements of 100 x 200 cm.

When the layer (1) is formed by fiberglass veil, geotextile or hessians, the structural base (1) must preferably be impregnated with an acrylic-based styrene copolymer, forming the base priming layer (2), and having the purpose of adhering the next layer of microcement to the structural base.

The base priming layer(2) is preferably formed by an acrylic-based styrene copolymer with a minimum consumption of 50 g/m².

The polymeric microcement layer (3) preferably comprises a minimum consumption of 300 g/m² per layer and mixed in a ratio of 1:2 or 1:3 of water-based synthetic resins.

Advantageously, the layer (3) includes weather-resistant inorganic pigments with which various selected tones, textures and colors, polymers and additives providing an optimum interlayer anchoring, impermeability, flexibility and malleability are obtained.
- The sealing or priming layer (4) can preferably contain synthetic resins made of acrylic copolymers with an approximate consumption of 45 g/m² or a layer of polyurethane or epoxy resin and with a consumption of about 60 g/m², applied manually or with a varnishing gun.

The surface finishing layer (5) can preferably contain a layer of synthetic epoxy resin with an approximate consumption of 70 g/m² and a second layer of aliphatic polyurethane of about 70 g/m².

According to another object of the present invention, the microcement laminate for coating surfaces is characterized in that it is supplied in the form of rolls or tiles for quick and easy application.

Another object of the present invention is to provide a process of obtaining a microcement laminate for coating surfaces comprising the following steps:
a) preparing the structural base (1) by spreading a thin microcement layer with a mass comprising polypropylene microfibers in a ratio of 150 grams per 25 kilos of microcement. Leaving to dry for at least 1 hour and sanding with a 120-grit sandpaper.
b) preparing the polymeric microcement layer (3) mixed in the ratio of 1:3 with respect to polymer resins, spreading it with a consumption of 425 g/m², leaving to dry for 1 hour and sanding with 240-grit sandpaper.
c) sealing with a sealing layer (4) made of acrylic copolymers with a consumption of 45 g/m², leaving to dry for 2 hour at 20 degrees Celsius and 60% humidity.

According to another important aspect, the present invention relates to the use of the microcement laminate for coating surfaces such as floors, walls, columns, stairs, furnishings and other surfaces both indoors and outdoors.

### Brief Description of the Drawings

To complement the description that is being made and for the purpose of aiding to better understand the features of the invention according to a preferred practical embodiment thereof, a drawing is attached as an integral part of said description in which the following has been depicted with an illustrative and non-limiting character:

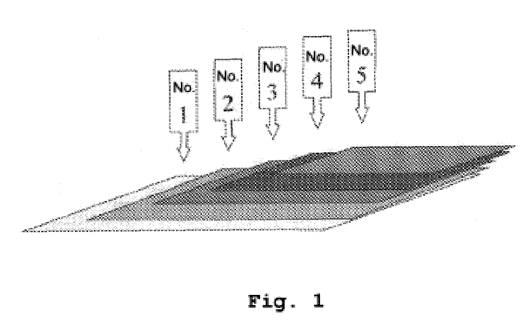

Figure 1 shows the structural base indicated as No. 1, the base priming layer as No. 2, the polymeric microcement layer as No. 3, the sealing or priming layer corresponds to No. 4, and No. 5 refers to the surface finishing layer, whether a varnish, wax, etc.

### Description of a Preferred Embodiment

The preferred embodiment indicated below is provided by way of non-limiting, illustrative purposes in order to better understand the invention.

The microcement laminate can be made:
On a base made of a fiberglass veil, impregnating it with a copolymer, leaving to dry for 4 hours. Manually applying the polymeric microcement layers with a trowel, leaving to dry, and interlayer smoothening with 240-grit sandpaper. Applying a sealing layer made of acrylic copolymers with a roller, leaving to dry for 2 hours. Finishing the surface with two layers of water-based bicomponent polyurethane, respecting the 4-hour interlayer drying. Laminating the visible face with a protective film once the varnish completely dries. With this exemplary process, a cementitious sheet which can vary its thickness and dimensions according to needs, used for the coating floors, walls, columns, stairs, furnishing or other porous or non-porous surfaces both indoors and outdoors, is obtained.

## Claims

1. A microcement laminate for coating surfaces comprising a body provided with at least 4 overlapping layers, a structural base layer (1), a polymeric microcement layer (3), a sealing or priming layer (4) and a surface finishing layer (5), **characterized in that** the laminate is flexible, moldable and **in that** it has a thickness between 0.3 mm and 4 mm.

2. The microcement laminate for coating surfaces according to claim 1, **characterized in that** it is fixed to the surfaces to be coated by means of an adhesive, preferably an adhesive mortar.

3. The microcement laminate for coating surfaces according to any of claims 1 to 2, **characterized in that** layer (1) is formed by elements selected from the group consisting of fiberglass veil, geotextile, natural hessians or a cement or microcement layer with a mass comprising polypropylene microfibers and/or steel and/or natural materials.

4. The microcement laminate for coating surfaces according to any of claims 1 to 3, **characterized in that** when the layer (1) is formed by fiberglass veil, geotextile or hessians, the structural base must be impregnated with an acrylic-based styrene copolymer forming the base priming layer (2).

5. The microcement laminate for coating surfaces according to claim 4, **characterized in that** the base priming layer (2) is formed by an acrylic-based styrene copolymer in a minimum amount of 50 g/m².

6. The microcement laminate for coating surfaces according to any of claims 1 to 2, **characterized in that** the polymeric microcement layer (3) comprises a minimum amount of 300 g/m² of microcement and it is in a ratio of 1:2 or 1:3 with respect to water or polymer resins.

7. The microcement laminate for coating surfaces according to any of claims 1 to 2, **characterized in that** layer (3) comprises inorganic pigments, polymers and additives providing an optimum interlayer anchoring, impermeability, flexibility and malleability.

8. The microcement laminate for coating surfaces according to any of claims 1 to 2, **characterized in that** the sealing or priming layer (4) contains synthetic resins made of acrylic copolymers in an amount of about 45 g/m².

9. The microcement laminate for coating surfaces according to any of claims 1 to 2, **characterized in that** the surface finishing layer (5) contains a layer of synthetic epoxy resin in an amount of about 70 g/m², and a second layer of aliphatic polyurethane in an amount of about 70 g/m².

10. The microcement laminate for coating surfaces according to any of claims 1 to 2, **characterized in that** it is supplied in the form of rolls or tiles for quick and easy application.

11. A process of obtaining a microcement laminate for coating surfaces according to claims 1 to 10, comprising the following steps:
a) preparing the structural base (1) by spreading a thin microcement layer with a mass comprising polypropylene microfibers in a ratio of 150 grams per 25 kilos of microcement,
b) leaving to dry for at least 1 hour and sanding with sandpaper,
c) preparing the polymeric microcement layer (3) mixed in a ratio of 1:3 with respect to polymer resins, spreading it with a consumption of 425 g/m², leaving to dry for at least 1 hour and sandpapering,
d) sealing with a sealing layer (4) made of acrylic copolymers with a consumption of 45 g/m², leaving to dry at about 20°C and with 60% humidity.

12. The use of the microcement laminate of claims 1 to 10 for coating surfaces such as floors, walls, columns, stairs, furnishing and other surfaces both indoors and outdoors.
